## Europäisches Patentamt
## European Patent Office
## Office européen des brevets

(19)

(11) Publication number: **0 055 794**
**B1**

(12) # EUROPEAN PATENT SPECIFICATION

(45) Date of publication of patent specification: **13.11.85**

(51) Int. Cl.⁴: **F 16 H 39/46**

(21) Application number: **81106803.0**

(22) Date of filing: **01.09.81**

(54) **Hydraulic power transmission.**

(30) Priority: **04.09.80 US 183937**

(43) Date of publication of application:
**14.07.82 Bulletin 82/28**

(45) Publication of the grant of the patent:
**13.11.85 Bulletin 85/46**

(84) Designated Contracting States:
**DE FR GB IT SE**

(56) References cited:
**DE-B-1 500 400**
**GB-A-1 212 674**
**GB-A-1 284 135**
**GB-A-1 428 162**
**US-A-3 359 727**
**US-A-4 118 931**
**US-A-4 149 380**

(73) Proprietor: **Vickers, Incorporated**
**1401 Crooks Road**
**Troy Michigan 48084 (US)**

(72) Inventor: **Edwards, Thomas L.**
**7831 Almont Road**
**Almont Michigan 48003 (US)**
Inventor: **Lambeck, Raymond P.**
**868 Helston Road**
**Bloomfield Hills Michigan 48013 (US)**

(74) Representative: **Zwirner, Gottfried, Dipl.-Ing.**
**Dipl.-W.-Ing. et al**
**BLUMBACH-WESER-BERGEN-KRAMER**
**ZWIRNER-HOFFMANN Patentanwälte**
**Sonnenberger Strasse 43**
**D-6200 Wiesbaden 1 (DE)**

Courier Press, Leamington Spa, England.

## Description

The invention relates to a hydraulic power transmission as described in the precharacterizing part of claim 1.

Such hydraulic power transmissions are used in vehicles, where the power of the hydraulic pump is shared with other hydraulic and mechanical devices.

In a known system referred to above (US—A—4,118,931) there is a mechanical linkage between the variable displacement pump and the speed sensing control valve, which is also influenced by the pressure drop along the orifice means in the supply line from the fixed displacement charge pump to the variable displacement pump. Such a system needs a multiple position valve for the selection of the direction of the movement of a vehicle driven by the hydrostatic drive, and also the speed sensing control valve is of sophisticated nature.

From US—A—3,742,820 a feed-back valve means is known comprising a pair of mutually and oppsitely adjustable flow restrictors, connected between the outlet of the variable displacement pump and the tank having a control outlet to the valve which controls the displacement of the variable pump. There is a mechanical linkage as an input means between the variable displacement pump and the feed-back valve means to vary the flow restrictors equally and oppositely in proportion to the movements of the displacement varying means.

In hydraulic power transmission systems of the kind referred to above, wherein the prime mover is a diesel engine, there is the tendency to produce an unstable condition. Specifically, as the pump displacement is reduced when the torque of the engine is reduced, the engine goes on high speed and the pump to full displacement.

It is an object of the present invention to provide a hydraulic power transmission mentioned above wherein the hydraulic power of the variable pump is limited in response to the speed of the prime mover, which drives the variable pump and wherein the components used are simple and economic.

This aim is fulfilled with the combination of features as mentioned in claim 1.

The hydraulic power transmission of the invention can include a further hydraulic system showing the same components and being connected as given in claim 2.

FIG. 1 is a schematic circuit diagram of a hydraulic system embodying the invention.

FIG. 2 is a fragmentary longitudinal sectional view of a portion of a variable displacement pump and feedback valve used in the system.

FIG. 3 is a longitudinal sectional view of a speed sensing valve used in the system.

FIG. 4A is a curve of torque versus engine speed for a conventional diesel engine.

FIG. 5A is a curve of pump displacement versus engine speed for a hydraulic system not embodying the invention.

FIG. 5B is a curve of pressure versus engine speed for a hydraulic system not embodying the invention.

FIG. 5C is a curve of torque versus engine speed for a hydraulic system not embodying the invention.

FIG. 6A is a curve of pump displacement versus engine speed for a hydraulic system embodying the invention.

FIG. 6B is a curve of pressure versus engine speed for a hydraulic system embodying the invention.

FIG. 6C is a curve of torque versus engine speed for a hydraulic system embodying the invention.

Description

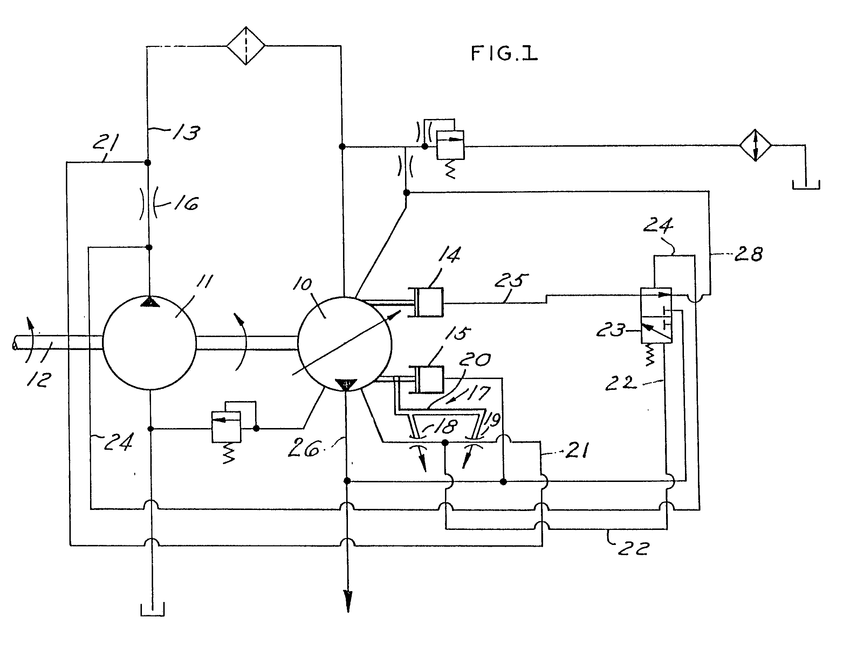

Referring to FIG. 1, the hydraulic system embodying the invention comprises a full flow supercharged variable displacement pump 10 and a fixed displacement charge pump 11 driven by a common shaft from a gear box which is, in turn, driven by a prime mover such as an engine, not shown. The charge pump 11 supplied fluid to the inlet of the variable displacement pump through a line 13.

The variable displacement pump 10 is of conventional construction and includes means for varying the displacement of the pump such as a destroking piston 14 and a stroking piston 15. Conventionally, the charge pump 11 is made of an internal part of the variable displacement pump 10.

In accordance with the invention, an orifice 16 is placed in line 13. A feedback valve 17 is connected to the displacement varying means of the pump 10 and comprises a pair of mutually and oppositely adjustable laminar flow restrictions 18, 19 in series. A member 20 connects the restrictions to the variable displacement means to vary them equally and oppositely in proportion to the movements of the displacement varying means. A line 21 provides a circuit from a point downstream of the orifice 16 to the feedback device 17 and the outlet 22 of the feedback device 17 is directed to the spring end of a speed sensing valve 23. A line 24 extends from a point upstream of orifice 16 to the other end of valve 23. The speed sensing valve 23 is thus operable in response to a predetermined pressure differential between the outlet of the feedback valve 17 and the pressure upstream of the orifice to vary the displacement of the pump 10 through a line 25 to the destroking piston 14. The feedback valve 17 is similar to that disclosed in U.S. patent 3,742,820 except for the manner in which it is connected in the circuit.

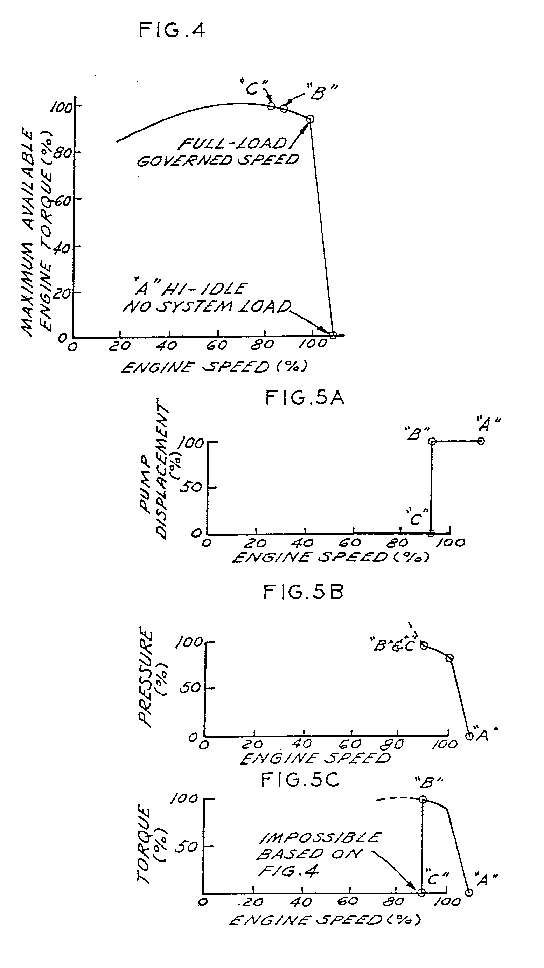

The operation and function of the circuit can best be understood by reference to FIGS. 4, 5A, 5B, 5C, 6A, 6B and 6C. FIG. 4 is a typical curve of torque versus engine speed for a diesel engine, and the pump and engine will tend to follow this curve at all times. FIG. 5A shows the manner in which pump displacment, pressure and torque vary with engine speed for a hydraulic system not embodying the invention. For example, as the load on the pump is increased to point B, the engine speed decreases along the curve to point B in FIG. 5A. If the load is increased from point A to B, when the pump and engine are at point B, a signal is given to reduce pump displacement. At zero displacement, the engine will try to follow the torque curve back to point A and drive the pump to full displacement. However, due to the lag between engine acceleration and pump reaction, the engine may oscillate between points C and B resulting in an unstable condition.

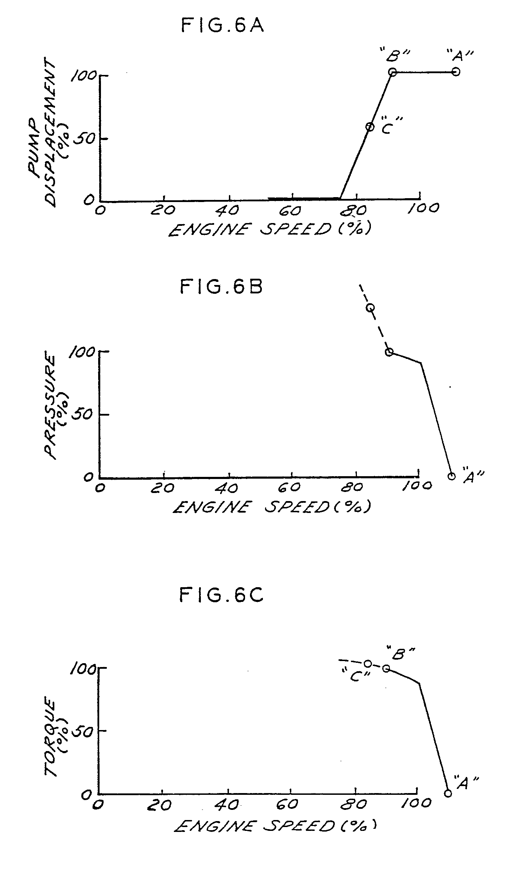

FIGS. 6A, 6B and 6C show the curves of pump displacement, pressure and torque versus engine speed for a system embodying the invention. As shown in the curve of pump displacement versus speed (FIG. 6A), the slope of the curve containing points B and C has a positive value so that condition C can exist in a stable manner. Similarly, the system embodying the invention will function in a stable manner when the pressure is constant and the mechanical load on the engine varies.

In practice the orifice means may be shared with a second identical hydraulic system wherein the charge pump and variable displacement pump are driven by the same prime mover.

As shown in FIG. 1, fluid from the outlet 26 of the variable displacement pump 10 is connected through a line 27 to speed sensing valve 23. When the valve 23 is operated, the high pressure is connected through lines 27, 25 to the destroking piston 14 which reduces the displacement of the pump 10. In the normal position of the valve 23, line 25 is connected through a line 28 to low pressure, or is closed.

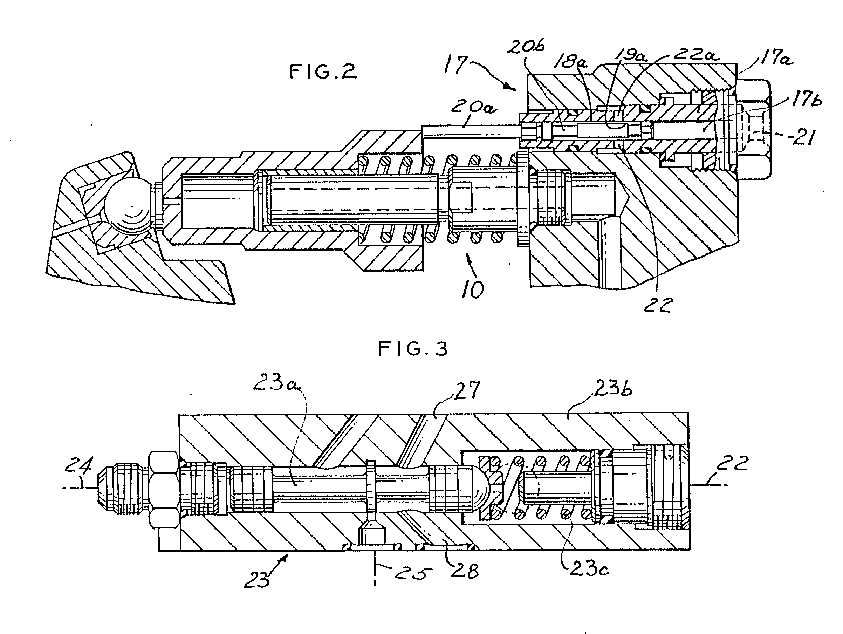

FIG. 2 shows the feedback device 17 forming a part of a variable displacement piston pump 10, similar parts being designated with the same number with a letter suffix a, b for convenience.

The adjusting means 20 of the restrictors 18, 19 is formed as a stem 20a sensing the stroke of the variable displacement pump 10. The valve 17 has a body 17a and a bore 17b, wherein a spool 20b is slidably guided. The restrictors 18, 19 are formed by the clearances 18a, 19a between the spool 20b and the wall of the bore 17b. Fluid being fed via line 21 is flowing through these clearances 19a, 18a into the low pressure casing of the pump 10. The lengths of the clearances 19a, 18a to the opening 22a (which is connected to line 22) vary according to the stroke of the pump 10 and, therefore, also to the restrictions of the restrictors 18, 19.

FIG. 3 is a sectional view of a speed sensing control valve 23, the parts being similarly designated.

The valve 23 comprises a spool 23a, a body 23b and a spring 23c. The lines 24 and 22 (via 21) are connected upstream and downstream of the orifice 16. The pressure drop at this orifice 16 is proportional to the speed of the fixed displacement pump 11, therefore, valve 23 is a speed sensing means, the speed signal being modulated by the feedback means 17.

## Claims

1. A hydraulic power transmission comprising a full flow supercharged variable displacement pump (10) having displacement varying means (14, 15), a fixed displacement charge pump (11) adapted to be driven by the same prime mover as said variable displacement pump (10) for supplying fluid to said variable displacement pump (10) through a supply line (13), a speed sensing control valve (23) being connected to the outlet of said variable displacement pump (10) and operable to control said displacement varying means (14, 15), orifice means (16) in said supply line (13) to said variable displacement pump (10), circuit means (21, 24) providing a hydraulic connection from points upstream and downstream of said orifice means (16) to said speed sensing control valve (23) for operating same, feedback valve means (17) responsive to the position of said displacement varying means (14, 15).

characterized by:

said feedback valve means (17) comprising a pair of mutually and oppositely adjustable flow restrictors (18, 19) in series with said orifice means (16) and said circuit means (21), having a control outlet (22) connected to said sensing control valve (23) for controlling same, adjustment means (20) connecting said restrictors (18, 19) to said displacement varying means (14, 15) to vary them equally and oppositely in proportion to the movements of said displacement varying means (14, 15), said speed sensing control valve (23) being responsive to the pressure level between the two restrictors (18, 19) and the pressure level upstream of said orifice means (16) and operable to control said displacement varying means (14, 15) of the pump (10) when the pressure differential between the pressure at the outlet (22) of said feedback means (17) and the pressure (as at 24) upstream of said orifice means (16) falls below a predetermined value.

2. The hydraulic power transmission set forth in claim 1 wherein said circuit means (21, 24) leading from upstream and downstream points with respect to said orifice means (16) to a second feedback device and a second speed sensing control valve connected to a second variable displacement pump and a second fixed displacement charge pump.

3. The hydraulic system set forth in claim 1 or 2 wherein said feedback means (17) includes a body (17a) in which said adjustable flow restrictors (18, 19) are provided as clearances (18a, 19a) between body (17a) and a spool (20a).

4. The hydraulic system set forth in any of claims 1—3 wherein said speed sensing control valve (23) comprises a spool (23a) responsive to the pressure level between the two restrictors (18, 19) and the pressure level upstream of said orifice means (16).

5. The hydraulic system set forth in any of claims 1—4 wherein said speed sensing control (23) is operable to operate said displacement means (14) to reduce the displacement of the pump (10).

**Revendications**

1. Transmission d'énergie hydraulique comprenant:
— une pompe à cylindrée variable (10) suralimentée à plein régime et comportant un dispositif de variation de cylindrée (14, 15),
— une pompe d'alimentation à cylindrée fixe (11) adaptée pour être entraînée par la même source d'énergie que la pompe à cylindrée variable (10) pour fournir du fluide à ladite pompe à cylindrée variable (10) par l'intermédiaire d'un conduit d'alimentation (13).
— un distributeur de commande de détection de vitesse (23) relié à la sortie de la pompe à cylindrée variable (10) et pouvant opérer pour commander ledit dispositif de variation de cylindrée (14, 15).
— un moyen à orifice (16) prévu dans ledit conduit d'alimentation (13) de ladite pompe à cylindrée variable (10),
— un circuit (21, 24) établissant une liaison hydraulique entre des points situés en amont et en aval dudit orifice (16) et ledit distributeur de commande de détection de vitesse (23) pour faire fonctionner celui-ci,
— une soupape de réaction (17) répondant à la position dudit dispositif de variation de déplacement (14, 15), caractérisée en ce que:
— ladite soupape de réaction (17) comprend une paire d'étranglements d'écoulement (18, 19) réglables mutuellement et en sens opposés, et placés en série avec ledit orifice (16) et ledit circuit (21), et comportant une sortie de commande (22) reliée audit distributeur de commande de détection de vitesse (23) pour commander celui-ci,
— un moyen de réglage (20) reliant lesdits étranglements (18, 19) avec ledit dispositif de variation de cylindrée (14, 15) pour les faire varier de façon égale et en sens opposés proportionnellement aux mouvements dudit dispositif de variation de cylindrée (14, 15),
— ledit distributeur de commande de détection de vitesse (23) réagissant au niveau de pression entre les deux étranglements (18, 19) et au niveau de pression en amont dudit moyen à orifice (16) et pouvant agir de façon à commander ledit dispositif de variation de cylindrée (14, 15) de la pompe (10) quand la différence entre la pression régnant à la sortie (22) dudit dispositif de réaction (17) et la pression (comme en 24) régnant en amont dudit moyen à orifice (16) tombe en dessous d'une valeur prédéterminée.
2. Transmission d'énergie hydraulique selon la revendication 1, caractérisée en ce que ledit circuit (21, 24) partant de points situés respectivement en amont et en aval dudit orifice (16) jusqu'à un second dispositif de réaction et un second distributeur de commande de détection de vitesse sont reliés à une seconde pompe à cylindrée variable et à une seconde pompe d'alimentation à cylindrée fixe.

3. Transmission d'énergie hydraulique selon l'une des revendications 1 et 2, caractérisée en ce que ledit moyen de réaction (17) comprend un corps (17a) dans lequel lesdits étranglements d'écoulement réglables (18, 19) sont formés par des intervalles (18a, 19a) entre le corps (17a) et un tiroir (20b).

4. Transmission d'énergie hydraulique selon l'une quelconque des revendications 1 à 3, caractérisée en ce que ledit distributeur de commande de détection de vitesse (23) comprend un tiroir (23a) répondant au niveau de pression entre les deux étranglements (18, 19) et au niveau de pression régnant en amont dudit orifice (16).

5. Transmission d'énergie hydraulique selon l'une quelconque des revendications 1 à 4, caractérisée en ce que ladite commande de détection de vitesse (23) peut agir pour actionner ledit moyen de variation de cylindrée (14) afin de réduire la cylindrée de la pompe (10).

**Patentansprüche**

1. Hydraulischer Antrieb mit folgenden Merkmalen:
eine Hydropumpe mit veränderlichem Verdrängungsvolumen ("Stellpumpe") (10) weist eine Verdrängungseinrichtung (14, 15) auf und wird über den vollen Strom aufgeladen;
eine Ladepumpe (11) mit konstantem Verdrängungsvolumen ist zum Antrieb vom gleichen Motor eingerichet wie die Stellpumpe (10) und liefert über eine Zufuhrleitung (13) Fluid an die Stellpumpe (10);
ein Geschwindigkeitsabtast-Steuerventil (23) ist mit dem Auslaß der Stellpumpe (10) verbunden und zur Steuerung der Verdrängungsstelleinrichtung (14, 15) betätigbar;
eine Meßblende (16) liegt in der Zufuhrleitung (13) zur Stellpumpe (10);
Leitungen (21, 24) bilden eine hydraulische Verbindung stromauf und stromab von der Meßblende (16) zu dem Geschwindigkeitsabtast-Steuerventil (23) zu dessen Betätigung;
eine Rückkopplungsventileinrichtung (17) spricht auf die Lage der Verdrängungsstelleinrichtung (14, 15) an;
gekennzeichnet durch:
die Rückkopplungsventileinrichtung (17) weist zwei gegensinnig verstellbare Drosseln (18, 19) in Serie zur Meßblende (16) und der Leitung (21) auf und besitzt einen Steuerauslaß (22), der mit dem Geschwindigkeitsabtast-Steuerventil (23) zu dessen Steuerung verbunden ist;
eine Einstelleinrichtung (20) verbindet die Drosseln (18, 19) mit der Verdrängungsstelleinrichtung (14, 15) zu deren gleichen und gegensinnigen Verstellung proportional zur Bewegung der Verdrängungsstelleinrichtung (14, 15);
das Geschwindigkeitsabtast-Steuerventil (23) spricht auf den Druckpegel zwischen den beiden Drosseln (18, 19) und dem Druckpegel oberhalb der Meßblende (16) an und ist zur Steuerung der Verdrängungsstelleinrichtung (14, 15) der Stellpumpe (10) betätigbar, wenn die Druckdifferenz zwischen dem Druck am Auslaß (22) der Rückkopplungseinrichtung (17) und dem Druck (wie bei 24) stromauf von der Meßblende (16) unterhalb einen vorbestimmten Wert fällt.

2. Hydraulischer Antrieb nach Anspruch 1, dadurch gekennzeichnet, daß die stromauf und stromab von der Meßblende (16) angeschlossenen Leitungen (21, 24) zu einer zweiten Rückkopplungseinrichtung und einem zweiten Geschwindigkeitsabtaststeuerventil führen, die mit einer zweiten Stellpumpe und einer zweiten Ladepumpe mit konstantem Verdrängungsvolumen verbunden sind.

3. Hydraulischer Antrieb nach Anspruch 1 oder 2, dadurch gekennzeichnet, daß die Rückkopplungseinrichtung (17) einen Körper (17a) aufweist, in welchem die einstellbaren Drosseln (18, 19) als Spalte (18a, 19a) zwischen dem Körper (17a) und einem Schieberkolben (20a) vorgesehen sind.

4. Hydraulischer Antrieb nach einem der Ansprüche 1 bis 3, dadurch gekennzeichnet, daß das Geschwindigkeitsabtast-Steuerventil (23) einen Schieberkolben (23a) aufweist, der auf den Druckpegel zwischen den beiden Drosseln (18, 19) und dem Druckpegel stromauf von der Meßblende (16) anspricht.

5. Hydraulischer Antrieb nach einem der Ansprüche 1 bis 4, dadurch gekennzeichnet, daß das Geschwindigkeits-Steuerabtastventil (23) zur Betätigung der Verdrängungsstelleinrichtung (14) in Richtung auf Verringerung des Verdrängungsvolumens der Stellpumpe (10) betätigbar ist.

FIG.1

FIG.2

17    20b    18a    19a    22a    17a

20a    17b

21

10

22

FIG.3

23a    27    23b

24    22

23    25    28    23c

2

0 055 794

0 055 794

FIG.4

FIG.5A

FIG.5B

FIG.5C

FIG.6A

FIG.6B

FIG.6C